# EUROPÄISCHE PATENTANMELDUNG

(11) **EP 1 070 935 A2**
(43) Veröffentlichungstag der Anmeldung: **24.01.2001**
(21) Anmeldenummer: 00113063.2
(22) Anmeldetag: 26.06.2000
(51) Int. Cl.: G01B 11/04, G01B 21/06

(54) **Überwachungseinrichtung für die Siegelstegbreite**

(30) Priorität: 08.07.1999 DE 19931710
(71) Anmelder: Bayer Bitterfeld GmbH, 06803 Greppin (DE)
(72) Erfinder: Wecke, Wolfgang, 06766 Wolfen (DE); Feja, Siegbert, 06766 Wolfen (DE); Hoffmann, Eckhard, 06766 Wolfen (DE)
(74) Vertreter: Drope, Rüdiger, Dr.

(57) **Zusammenfassung**

Vorrichtung und Verfahren zur Überwachung der Breite des Quersiegelsteges einer in Längsrichtung taktförmig oder kontinuierlich weitertransportierten versiegelten, geschnittenen Packungseinheit, in der Produkte verpackt sind. Zwei laseroptische Sensoren sind einander gegenüber oberhalb und unterhalb der geschnittenen Packungseinheiten angeordnet. Die dem Abstand zur Packungseinheit entsprechenden Meßwerte der Sensoren werden mit einer geschwindigkeitsproportionalen Taktfrequenz erfasst. Es wird ein Differenzwert aus den Meßwerten der beiden Sensoren, die im selben Takt aufgenommen worden sind, gebildet und es wird ein Ausgangssignal erzeugt, wenn die Zahl der aufeinanderfolgenden Differenzwerte, die einen vorgegebenen Referenzwert überschreiten oder unterschreiten, einen vorgegebene kritischen Wert unterschreitet.

## Beschreibung

Die Erfindung betrifft eine Vorrichtung und ein Verfahren zur Überwachung der Siegelstegbreite von versiegelten Packungseinheiten, in denen Produkte verpackt sind.

Bei den Produkten kann es sich beispielsweise um feste Körper, Pulver, Granulate, Pasten oder Flüssigkeiten handeln. Solche Produkte werden häufig in versiegelten Packungseinheiten, insbesondere luftdicht versiegelten Packungseinheiten, verpackt, um sie vor Austrocknung oder dem Eindringen von Feuchtigkeit oder auch hinsichtliche ihrer Sterilität (Kontamination durch Mikroorganismen) zu schützen. Typische Produkte in der Lebensmittelindustrie sind Senf, Mayonnaise oder Ketchup und in der pharmazeutischen Industrie Tabletten, Dragees, Hautgele oder Salben.

Zum Verständnis der Erfindung wird im folgenden beispielhaft auf die Verpackung von feuchtigkeitsempfindlichen, pharamzeutischen Präparaten in Tablettenform eingegangen. Als Packmittel für feuchtigkeitsempfindliche pharamzeutische Präparate in Tablettenform werden häufig Folien verwendet, die um die Tabletten herum zugesiegelt werden. Jede Tablette befindet sich in einer luftdicht abgeschlossenen Zelle, die außen herum von Siegelnähten begrenzt ist. In der Regel sind mehrere zum Beispiel zwei oder vier versiegelte Tabletten in einer streifenförmigen Packungseinheit untergebracht. Als Packmaterial sind insbesondere Aluminium-Verbundfolien geeignet. Zum Gebrauch des Medikaments wird eine Streifeneinheit mit Tabletten aus der Vorratspackung entnommen und die Folie in der Nähe einer Tablette aufgerissen, so dass die Tablette zur Verfügung steht.

Von der Siegelmaschine im Produktionsbetrieb werden die Tabletten luftdicht eingesiegelt auf einem Folientablettenträger bereitgestellt, bei dem jede Tablette im Carrée von zwei Längssiegelstegen und zwei Quersiegelstegen eingeschlossen ist. Die Längssiegelstege sind parallel zu den Rändern bzw. Kanten des Folienträgers und die Quersiegelstege senkrecht dazu angeordnet. Bei der Konfektionierung und automatischen Verpackung wird nun der Tablettenträger jeweils im Bereich eines Quersiegelstegs abgeschnitten, so dass kleinere streifenförmige Packungseinheiten mit zum Beispiel jeweils zwei oder vier Tablette hergestellt werden, die dann in einer Schachtel à 10 bis 40 Einheiten handelsfertig abgepackt werden.

Als Abschneidevorrichtung wird üblicherweise eine rotierende Messerwalze eingesetzt, die den Trennschnitt möglichst genau (±1 mm) in der Mitte eines Quersiegelstegs setzt. In der betrieblichen Praxis hat sich jedoch gezeigt, dass die Toleranzen der Siegelstege in Längsrichtung so groß sind, dass die oben geforderte Genauigkeit nicht erreicht werden kann. Die Ungenauigkeit beim Trennschnitt hat zur Folge, dass der Quersiegelsteg in ungünstigen Fällen am Rand oder sogar außerhalb der Stegbreite geschnitten wird und die geforderte zuverlässig dichte Einsiegelung der Tabletten nicht mehr gewährleistet ist. In diesen Fällen kann Luft und Feuchtigkeit eindringen und die Haltbarkeit der Tabletten ist stark beeinträchtigt.

Der Erfindung liegt die Aufgabe zugrunde die Breite des Quersiegelsteges der geschnittenen Packungseinheiten zu überwachen und bei fehlerhaften Trennschnitten ein charakteristisches Signal zu erzeugen. Dieses Signal kann dann für eine automatische Ausschleusung der entsprechenden Packungseinheit verwendet werden.

Diese Aufgabe wird erfindungsgemäß durch ein Verfahren gelöst, das die folgenden Schritte enthält:
a. Von zwei laseroptischen Sensoren, die einander gegenüber oberhalb und unterhalb der geschnittenen Packungseinheiten angeordnet sind, werden mit einer der Transportgeschwindigkeit proportionalen Taktfrequenz Meßwerte, die dem Abstand zur abgetasteten Oberfläche entsprechen, erfasst;
b. Aus den beiden im selben Takt aufgenommenen Meßwerten der beiden Sensoren werden Differenzwerte gebildet;
c. Die Anzahl der aufeinanderfolgenden Differenzwerte, in denen ein vorgegebener Referenzwert überschritten oder unterschritten wird, wird ermittelt;
d. Wenn die in c. ermittelte Anzahl einen vorgegebenen kritischen Wert unterschreitet, wird ein Ausgangssignal erzeugt.

Befindet sich zum Zeitpunkt der Messung ein Tablettenstreifen zwischen den beiden Sensoren, so entspricht die Differenz der Meßwerte der beiden Sensoren (Differenzwert) der Dicke des Tablettenstreifens.

Im Bereich der Lücke zwischen zwei Packungseinheiten messen die laseroptischen Sensoren Abstände zu sehr entfernten Oberflächen. Im Vergleich unterscheiden sich die Abstände zu diesen fernen Oberflächen von den Abständen zu einer durchlaufenden Packungseinheit um mehrere Größenordnungen. Damit nicht die aus den Abständen zu den fernen Oberflächen resultierenden unkontrolliert großen Meßwerte der Sensoren weiterverarbeitet werden, können diese Meßwerte in jedem Sensor auf einen vorgegebenen, konstanten Meßwert gesetzt werden.

Die Taktfrequenz kann durch einen Taktfrequenzgeber erzeugt werden, der an die Antriebswelle der Fördereinrichtung, die die streifenförmigen Packungseinheiten taktförmig oder kontinuierlich transportiert, gekoppelt ist.

Die laseroptischen Sensoren sind vorzugsweise farbunabhängig.

Entsprechend einer bevorzugten Ausführungsform der Erfindung löst das Ausgangssignal eine Ausschleusung der entsprechenden Packungseinheit aus.

Weiterhin ist Gegenstand der Erfindung eine Vorrichtung zur Durchführung des erfindungsgemäßen Verfahrens. Diese Vorrichtung besteht aus zwei laseroptischen Sensoren, die einander gegenüber oberhalb und unterhalb der geschnittenen Packungseinheiten angeordnet sind und deren Meßwerte mit einer geschwindigkeitsproportionalen Taktfrequenz erfasst werden, einem Taktfrequenzgeber, der die Taktfrequenz zur Erfassung der Meßwerte vorgibt, einer Anpassungseinheit, die den Differenzwert aus den beiden im selben Takt gemessenen Meßwerten der Sensoren bildet und der Auswerteeinheit, die die Anzahl der aufeinanderfolgenden Differenzwerte, die ober- bzw. unterhalb eines Referenzwertes liegen, ermittelt und ein Ausgangssignal erzeugt, wenn die Anzahl der Differenzwerte einen vorgegebenen kritischen Wert unterschreitet.

Der Taktfrequenzgeber ist vorzugsweise so an die Antriebswelle der Fördereinrichtung, die die streifenförmigen Packungseinheiten transportiert, gekoppelt, dass er eine geschwindigkeitsproportionale Taktfrequenz erzeugt.

In einer bevorzugten Ausführungsform der erfindungsgemäßen Vorrichtung produzieren die Sensoren analoge Meßwerte aus dem ein analoger Differenzwert resultiert und die Anpassungseinheit passt den analogen Differenzwert an einen Analog-Digital-Umsetzer (ADU) an und erzeugt einen digitalen Differenzwert, der in der Auswerteeinheit weiterverarbeitet wird.

Die Meßwerte der Sensoren, die für den Bereich der Lücke zwischen zwei Packungseinheiten charakteristisch sind, nehmen bevorzugt eine vorgegebene, konstante Größe an.

Bevorzugt fixiert ein Niederhalter die geschnittenen Packungseinheiten im Bereich der laseroptischen Sensoren auf ihrer Unterlage.

In einer bevorzugten Ausführungsform der Erfindung ist in Förderrichtung hinter den laseroptischen Sensoren eine Ausschleusungseinheit angeordnet, die bei Empfang eines Ausgangssignals der Auswerteeinheit die entsprechende fehlerhafte Packungseinheit ausschleust.

Mit der Erfindung werden folgende Vorteile erzielt:

Verpackungen mit Schnittfehlern können automatisch und zuverlässig identifiziert werden. Es kann verhindert werden, dass solche fehlerhaften Verpackungseinheiten weiter abgepackt werden.

Durch den Ausschluss dieser Fehlerquelle kann die geforderte Produkthaltbarkeit zuverlässig eingehalten werden. Die sonst übliche Nachkontrolle kann entfallen.

### Figuren und Beispiele

Im folgenden wird die Erfindung an Hand eines Ausführungsbeispiels und Zeichnungen näher erläutert. Es zeigen
- Fig. 1: Vorrichtung zur Überwachung der Breite des Quersiegelsteges
- Fig. 2: Schaltung zur Erzeugung des Ausgangssignals
- Fig. 3: Messung der Siegelstegbreite
- Fig. 4: Differenzwertverlauf bei annähernd gleichen Siegelstegbreiten
- Fig. 5: Differenzwertverlauf bei ungleichen Siegelstegbreiten

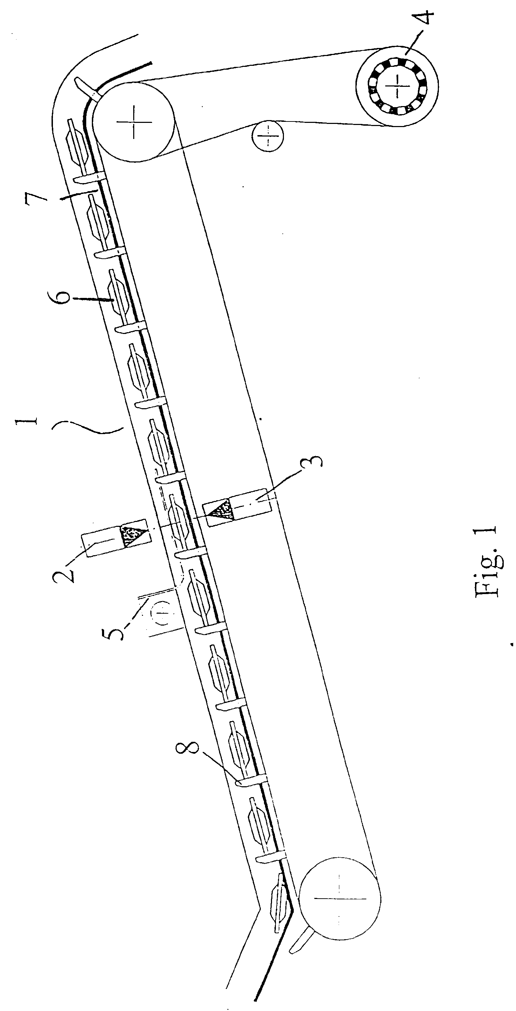

Die Vorrichtung zur Überwachung der Breite des Quersiegelsteges wird an eine Fördereinrichtung 1, die die streifenförmigen Packungseinheiten 6 kontinuierlich transportiert, installiert (Fig. 1). Die Packungseinheiten 6 liegt dabei auf winkelförmigen Transportschienen 7 und wird durch senkrecht stehende Transportfinger 8 vorwärts geschoben. Zwischen zwei Packungseinheiten ist eine Lücke von etwa 110 mm. Die laseroptischen Sensoren 2 und 3 sind einander gegenüber mit Strahlrichtung senkrecht zur Förderrichtung oberhalb (Sensor 2) und unterhalb (Sensor 3) der Fördereinrichtung 1 angeordnet. Sie messen den Abstand zu einer der Packungseinheiten 6 und erzeugen ein dem Abstand entsprechendes Spannungssignal. Befindet sich keine Verpackungseinheit zwischen den Sensoren 2 und 3, so wird von jedem Sensor ein vorgegebener Meßwert von -5 V abgegeben. Die Sensoren 2 und 3 werden mit einer der Transportgeschwindigkeit proportionalen Taktfrequenz ausgelesen. Die Taktfrequenz wird durch den an die Antriebswelle der Fördereinrichtung 1 gekoppelten Taktfrequenzgeber 4 vorgegeben.

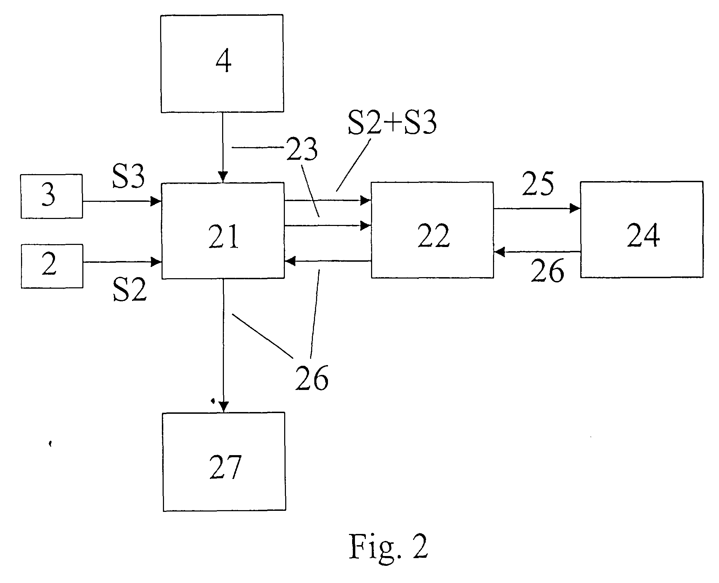

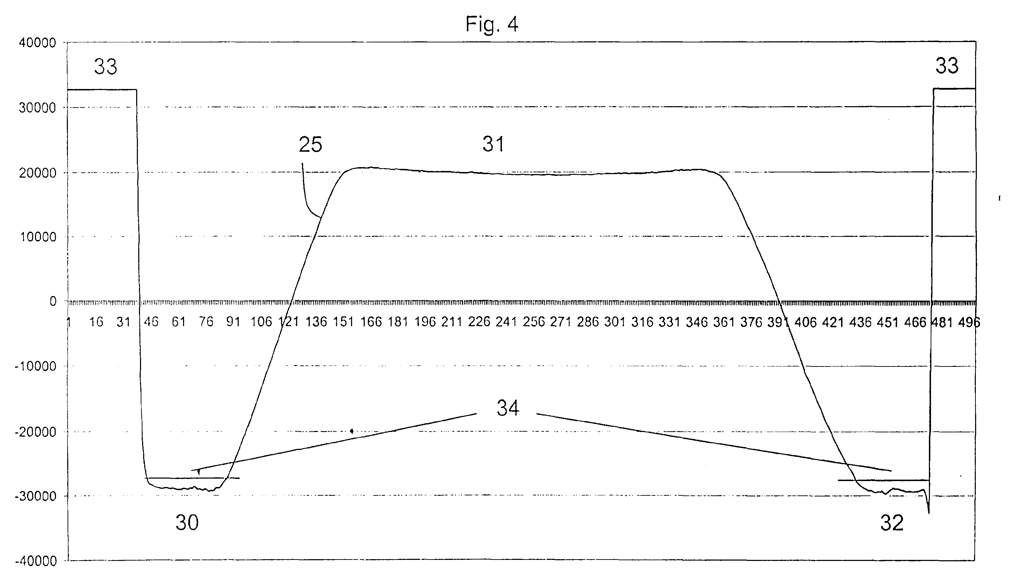

Die Meßwerte der Sensoren 2 und 3 werden entsprechend der Auswerteschaltung in Fig. 2 weiterverarbeitet. Beide Sensoren sind mit einer Anpasseinheit 21 verbunden. In der Anpasseinheit 21 wird aus den beiden analogen Meßwerten S2,S3 der Sensoren der analoge Differenzwert S2+S3 gebildet und an den analogen Eingangsspannungsbereich eines Analog-Digital-Umsetzers 22 angepasst. Die Umsetzung des analogen Differenzwertes S2+S3 in einen digitalen Wert 25 findet im Analog-Digital-Umsetzer (ADU) 22 statt. Zur Gewährleistung einer längenäquidistanten Abtastung bei den Messungen der Sensoren 2,3 findet die Umsetzung des analogen S2+S3 in den digitalen 25 Differenzwert im ADU 22 mit einer Taktfrequenz 23 statt, die durch einen an die Antriebswelle der Fördereinrichtung 1 gekoppelten Taktfrequenzgeber 4 erzeugt wird. Die digitalen Differenzwerte 25 werden in der Auswerteeinheit 24 mit dem vorgegebenen Referenzwert 34 (Fig. 4) verglichen und die Anzahl der Differenzwerte 25, die unterhalb des vorgegebenen Referenzwertes 34 liegen ermittelt. Liegt die Anzahl der so ermittelten Differenzwerte 25 unter einem kritischen Wert, so erzeugt die Auswerteeinheit 24 das Ausgangssignal 26, das über den ADU 22 und die Anpasseinheit 21 eine Ausschleusungseinheit 27 steuert.

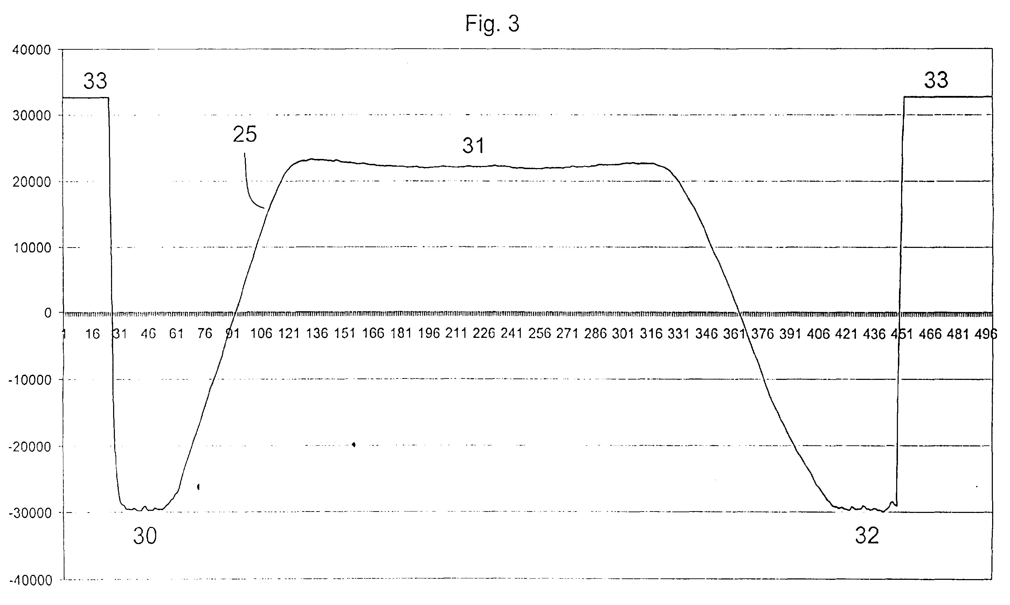

Fig. 3 zeigt einen typischen Verlauf der Differenzwerte 25 für einen Tablettenstreifen, wie sie in der Auswerteeinheit 24 vorliegen. Der Abstand zwischen zwei Werten ist dabei kein konstanter zeitlicher Abstand, sondern der Abstand von zwei Takten des Taktfrequenzgebers 4. Die Differenzwerte 25 sind über den Taktwerten aufgetragen. Im Bereich des vorderen Siegelstegs 30 liegt der Differenzwert für etwa 60 Takte bei negativen Werten, steigt dann im Bereich des verpackten Produkts 31 auf positive Werte an und erreicht im Bereich des hinteren Siegelstegs 32 für etwa 90 Takte wieder Differenzwerte im negativen Bereich. In der Lücke 33 zwischen den Tablettenstreifen liegt der Differenzwert bei einem vorgegebenen positiven Wert.

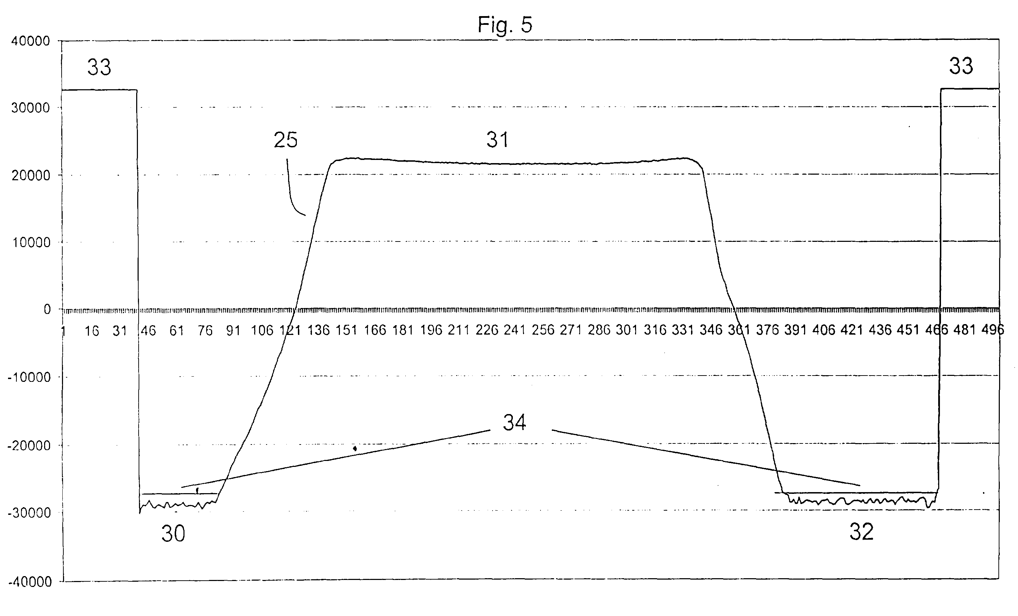

In den Fig. 4 und Fig. 5 sind im Vergleich der Verlauf einer Meßkurve bei annähernd gleichen Siegelstegbreiten und bei ungleichen Siegelstegbreiten gezeigt. Der grundsätzliche Verlauf der Meßkurven ist der in Fig. 3 beschriebene mit den Bereichen Lücke 33, vorderer Siegelsteg 30, verpacktes Produkt 31 und hinterer Siegelsteg 32. Der Referenzwert 34 ist im Bereich der Meßkurve, die den Siegelstegen 30 und 32 entspricht, eingezeichnet. Die Anzahl der Takte, für die die Meßkurve unterhalb des Referenzwertes 34 liegt, wird ermittelt und mit einem vorher festgelegten kritischen Wert verglichen. Liegt die Anzahl der Takte mit Differenzwerten 25 unterhalb des Referenzwertes 34 unter einem festgelegten kritischen Wert, so bedeutet dies, dass die Siegelstegbreite zu schmal ist, und als Konsequenz eine Ausschleusung der entsprechenden Verpackungseinheit, ausgelöst durch ein entsprechendes Ausgangssignal 26, stattfindet. In Fig. 4 ist die Anzahl der Takte mit Differenzwerten 25 unterhalb des Referenzwertes 34 für beide Siegelstege mit etwa 50 annähernd gleich groß, in Fig. 5 ist die Anzahl der Takte mit Differenzwerten 25 unterhalb des Referenzwertes 34 beim vorderen Siegelsteg 30 mit etwa 50 deutlich kleiner als beim hinteren Siegelsteg 32 mit etwa 90.

## Patentansprüche

1. Verfahren zur Überwachung der Breite des Quersiegelsteges einer in Längsrichtung taktförmig oder kontinuierlich weitertransportierten versiegelten, geschnittenen Packungseinheit (6), in der Produkte verpackt sind, dadurch gekennzeichnet dass
a. von zwei laseroptischen Sensoren (2,3), die einander gegenüber oberhalb und unterhalb der geschnittenen Packungseinheiten (6) angeordnet sind, Meßwerte (S2,S3), die dem Abstand zu einer abgetasteten Oberfläche entsprechen, mit einer geschwindigkeitsproportionalen Taktfrequenz (23) erfasst werden;
b. aus den beiden im selben Takt aufgenommenen Meßwerten (S2,S3) der beiden Sensoren Differenzwerte (S2+S3) gebildet werden;
c. die Anzahl der aufeinanderfolgenden Differenzwerte (S2+S3), in denen ein vorgegebener Referenzwert (34) überschritten oder unterschritten wird, ermittelt wird;
d. ein Ausgangssignal (26) erzeugt wird, wenn die in c. ermittelte Anzahl der Differenzwerte (S2+S3) einen vorgegebenen kritischen Wert unterschreitet.

2. Verfahren nach Anspruch 1, dadurch gekennzeichnet, dass die Taktfrequenz (23) durch einen Taktfrequenzgeber (4) erzeugt wird, der an die Antriebswelle der Fördereinrichtung (1) für die Packungseinheiten (6) gekoppelt ist.

3. Verfahren nach Anspruch 1 oder 2, dadurch gekennzeichnet, dass die Meßwerte (S2,S3) der laseroptischen Sensoren (2,3) bei Abtastung der Lücke zwischen zwei Packungseinheiten (6) einen vorgegebenen, konstanten Wert haben.

4. Verfahren nach einem der Ansprüche 1 bis 3, dadurch gekennzeichnet, dass das Ausgangssignal (26) die Ausschleusung der entsprechenden Packungseinheit (6) auslöst.

5. Vorrichtung zur Durchführung eines Verfahrens gemäß einem der Ansprüche 1 bis 4 bestehend aus zwei laseroptischen Sensoren (2,3), die einander gegenüber oberhalb und unterhalb der geschnittenen Packungseinheiten (6) angeordnet sind und deren Meßwerte (S2,S3) mit einer geschwindigkeitsproportionalen Taktfrequenz (23) erfasst werden, einem Taktfrequenzgeber (4), der die Taktfrequenz (23) zur Erfassung der Meßwerte (S2,S3) vorgibt, einer Anpassungseinheit (21), die den Differenzwert (S2+S3) aus den beiden im selben Takt gemessenen Meßwerten (S2,S3) der Sensoren (2,3) bildet und der Auswerteeinheit (24), die die Anzahl der Differenzwerte (S2+S3), die oberhalb oder unterhalb eines Referenzwertes (34) liegen, ermittelt und ein Ausgangssignal (26) erzeugt, wenn die Anzahl der Differenzwerte (S2+S3) einen vorgegebenen kritischen Wert unterschreitet.

6. Vorrichtung nach Anspruch 5, dadurch gekennzeichnet, dass zwischen die Anpassungseinheit (21) und die Auswerteeinheit (24) ein Analog-Digital-Umsetzer (22) geschaltet ist, in den der Differenzwert (S2+S3) in anloger Form eingespeist wird, und der den Differenzwert (25) in digitaler Form an die Auswerteeinheit (24) weitergibt.

7. Vorrichtung nach Anspruch 5 oder 6, dadurch gekennzeichnet, dass der Taktfrequenzgeber (4) so an die Antriebswelle der Fördereinrichtung (1) gekoppelt ist, dass er eine geschwindigkeitsproportionale Taktfrequenz (23) erzeugt.

8. Vorrichtung nach einem der Ansprüche 5 bis 7, dadurch gekennzeichnet, dass laseroptische Sensoren (2,3), deren Meßwerte (S2,S3) farbunabhängig sind, zum Einsatz kommen.

9. Vorrichtung nach einem der Ansprüche 5 bis 8, dadurch gekennzeichnet, dass im Bereich der laseroptischen Sensoren (2,3) ein Niederhalter (5) die geschnittenen Packungseinheiten (6) auf ihrer Unterlage fixiert.

10. Vorrichtung nach einem der Ansprüche 5 bis 9, dadurch gekennzeichnet, dass die Signale (S2,S3) der Sensoren (2,3), die für den Bereich der Lücke zwischen zwei Packungseinheiten (6) charakteristisch sind, jeweils einen konstanten Wert haben.

11. Vorrichtung nach einem der Ansprüche 5 bis 10, dadurch gekennzeichnet, dass in Förderrichtung hinter den laseroptischen Sensoren (2,3) eine Ausschleusungseinheit (27) angeordnet ist, die bei Empfang eines Ausgangssignals (26) der Auswerteeinheit (24) die entsprechende Packungseinheit (6) ausschleust.
